Europäisches Patentamt

European Patent Office

Office européen des brevets

(19)

(11) Publication number: **0 029 533**
**B1**

(12) **EUROPEAN PATENT SPECIFICATION**

(45) Date of publication of patent specification: **25.01.84**

(51) Int. Cl.³: **C 03 B 33/04, C 03 B 33/10**

(21) Application number: **80106846.1**

(22) Date of filing: **06.11.80**

(54) Apparatus for scoring flat sheets, especially glass sheets.

(30) Priority: **23.11.79 IT 2753179**

(43) Date of publication of application:
**03.06.81 Bulletin 81/22**

(45) Publication of the grant of the patent:
**25.01.84 Bulletin 84/4**

(84) Designated Contracting States:
**BE CH DE FR GB LI LU NL**

(56) References cited:
**FR - A - 2 339 577**
**US - A - 2 118 170**
**US - A - 2 270 462**
**US - A - 2 375 378**
**US - A - 3 047 953**
**US - A - 3 555 944**

(73) Proprietor: **Societa Italiana Vetro - SIV - S.P.A**
**I-66050 San Salvo (Chieti) (IT)**

(72) Inventor: **Rossi, Pier Luigi**
**Via Martiri della Resistenza**
**I-86039 Termoli (Campobasso) (IT)**

(74) Representative: **Jarach, Angelalberto, Dr. Ing.**
**Ingg. Guzzi, Ravizza & C. Via Broletto, 39**
**I-20121 Milano (IT)**

Courier Press, Leamington Spa, England.

## Apparatus for scoring flat sheets, especially glass sheets

The present invention relates to an apparatus for scoring flat sheets, especially glass sheets, in order to permit their easy and precise break along the score line.

Cutting equipments for glass sheets were already well-known formerly (U.S.A. Patent No. 2,375,378 to Morris and U.S.A. Patent No. 2,118,170 to Crowley). Some of such equipments suggested particularly how to cut with precision and quickly in the curves (U.S.A. Patent No. 3,047,953 to Billinger), how to obtain the lowest glass scrap from an original pane by using a double-acting cutting machine (U.S.A. Patent No. 2,270,462 to Morris).

In the U.S.A. Patent No. 3,555,944 to Imamura it is pointed out that it is possible to take the cutting wheel away from the template by the insertion of a conical roller coating with a guide plate. In any case, none of the well-known equipments purposes — like that of the present Patent Application — to cut with a single drive two patterns of different dimensions (the one shorter and the other longer) by using the same template, with the exception of that described in the French Patent No. 2,339,577 to Erwin Sick, wherein however several cutting tools are also used and the problem is faced more on the theorerical than on the practical plane.

The apparatus in accordance with the present invention proves to be especially useful and it represents a step forward in the industrial field for which it is designed in that it permits a single line score to be cut on the surface of glass sheets, following any required profile along a template suitably prepared for the purpose.

This apparatus is particularly suitable in the cutting of glass panes between which is laminated an intermediate plastic layer, because, as is well known, the glass panes to be used for forming the glass-plastic-glass sandwich require to be cut to the desired final size before being curved at the same time on an identical mould through a special furnace.

Of the two panes of glass cut to shape, one will be used for the inside part of the sandwich and one for the outer part of the sandwich; as the glass panes are not trimmed after being curved to shape, it is necessary that the dimensions of these two glass panes, when cut from flat sheet, be such as to take into account their subsequent curvature.

Consequently, the glass pane forming the outside of the sandwich, that is, the one with the greater radius of curvature, will be greater in length than the glass pane forming the inside of the sandwich which has a smaller radius of curvature.

The differences in length are in the order of a few millimetres since the differences in radius of curvature between the inner glass pane and the outer glass pane are also in the same order of magnitude.

In practice, for the industrial production of such items, one short pane and one long pane of glass are required to be cut alternately for the same model.

The object of the apparatus in accordance with the present invention is to provide just one means which is specially equipped in order to pass rapidly from cutting of one long dimension to the cutting of a shorter dimension, without it being necessary to change the cutting template each time, or else to double the cutting stations.

The present invention concerns an apparatus for scoring flat sheets, especially glass sheets, comprising a cutting machine and a cutting template, the last consisting of a main cutting ring (1), and of sectors (2, 2') projecting from one side of said ring (1) with said sectors being rigidly connected to said ring (1), as to offer a scoring profile, wherein the cutting machine is powered by an air motor (3) able to control, through a reduction gear (5), the rotation of travelling wheels (4) along the outer profile (1) of the template, and said machine is provided with a scoring device comprising a compressed air actuated double-acting piston (6), whose rod (7) slides up and down in a sleeve (8) and whose head acts against a spring (12) located, together with the head, in a cylindrical chamber (11) into which enters said compressed air characterized in that the sleeve (8) in said scoring device is smaller in diameter at the top and greater in diameter at the lower end where it tapers off to form a truncated conical surface (8') widening upwardly, and the piston rod (7) also terminates with a truncated conical surface (7') but widening towards the bottom, whereby a bearing (9), keyed to the part of the sleeve (8) of smaller diameter, can be locked between suitable shoulders, and another bearing (10) of the same diameter as the previous one can be locked between the truncated conical parts of the sleeve (8) and piston rod (7), with the upper bearing (9) opposing the main cutting ring (1) when the piston rod (7) is lowered and compressed air is discharged, and with the lower bearing (10) opposing respectively sectors (2, 2') projecting from the inside of said ring (1) and suitably located as to offer a different scoring profile when the piston rod (7) is raised and compressed air enters the cylindrical chamber (11), thus allowing the cutting tool to score the glass according to two different profiles, long or short, in relation to production requirements, and thereby to score two patterns of different dimensions (the one shorter and the other longer) by using the same template.

The apparatus in accordance with present invention is characterized moreover in that said scoring device is able to slide along two horizontal guides (13), which also support it, and is counteracted by two springs (14), hooked at one end to a fixed pin (15) and at the other end to a pin (16) which is movable in slots formed in the two guides (13); hence during automatic operation of the machine, either on or the other bearing (9, 10) is always in contact with the cutting template, according to whether compressed air is being supplied to or discharged from the cylindrical chamber (11) in which the piston head slides vertically.

The accompanying drawings, which are to be considered as an exemplification of the principles of the invention and are not intended to limit it, illustrate a preferred embodiment of the apparatus in accordance with the invention.

In the drawings:

figure 1 is a plan view of just the cutting template forming part of the apparatus in accordance with the invention, while

figure 2 is a cross sectional view of the same template along the line A—A of figure 1;

figure 3 is a partial cross sectional view of the actual cutting machine, provided with the characteristic device which permits its adaption to the long profile or to the short profile of the template illustrated in the preceding figures 1 and 2;

figure 4 is analogous to figure 3 but illustrates the piston rod lowered under the spring action, instead of being raised as shown in figure 3 under the action of compressed air, and

figure 5 is a front view of the actual cutting machine.

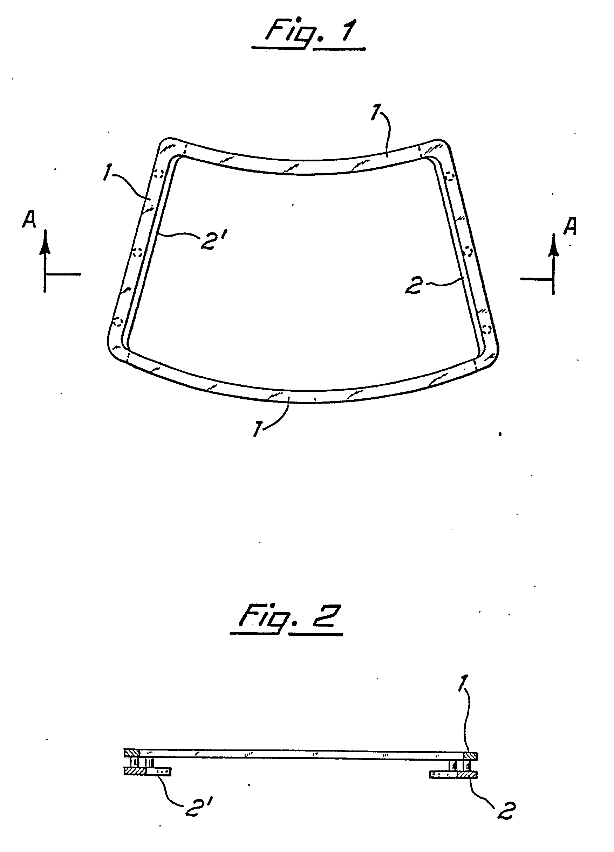

Referring to the drawings (figure 1), the main cutting ring of the template, through which the cutting machine is guided when scoring the long profile, is indicated by the reference character 1, while 2, 2' indicate the additional sectors used when scoring a piece of the same shape but shorter in length, subsequently used, for example, to form the inside part of a finished laminated product.

The additional sectors 2, 2' are rigidly connected to main cutting ring 1 with any suitable means.

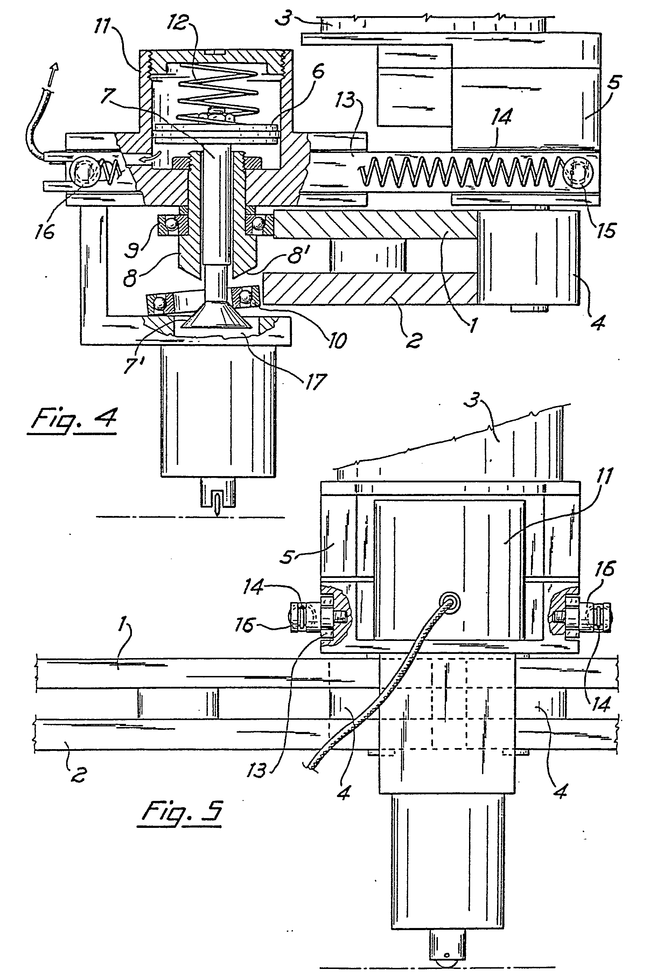

Figures 3 and 4 illustrate the actual cutting machine, arranged to follow up cutting ring 1, where the copying operation concerns the internal profile of said ring 1 or else, when requested, the internal profile of the same template 1 but modified by sectors 2, 2' which are suitably located in this case.

The cutting machine essentially consists of an air motor 3 (held in the vertical position by means of a supporting arm which is not shown in order to simplify the drawing) which commands, through reduction gear 5, the rotation of travelling wheels 4 (there are really two such wheels, but in figures 3 and 4 the second wheels is hidden by the first one) gradually along the entire outer profile of ring 1 and, along that of sectors 2, 2'.

This wheel movement also causes the main part of the cutting machine with relative scoring device to move along the path determined by the template.

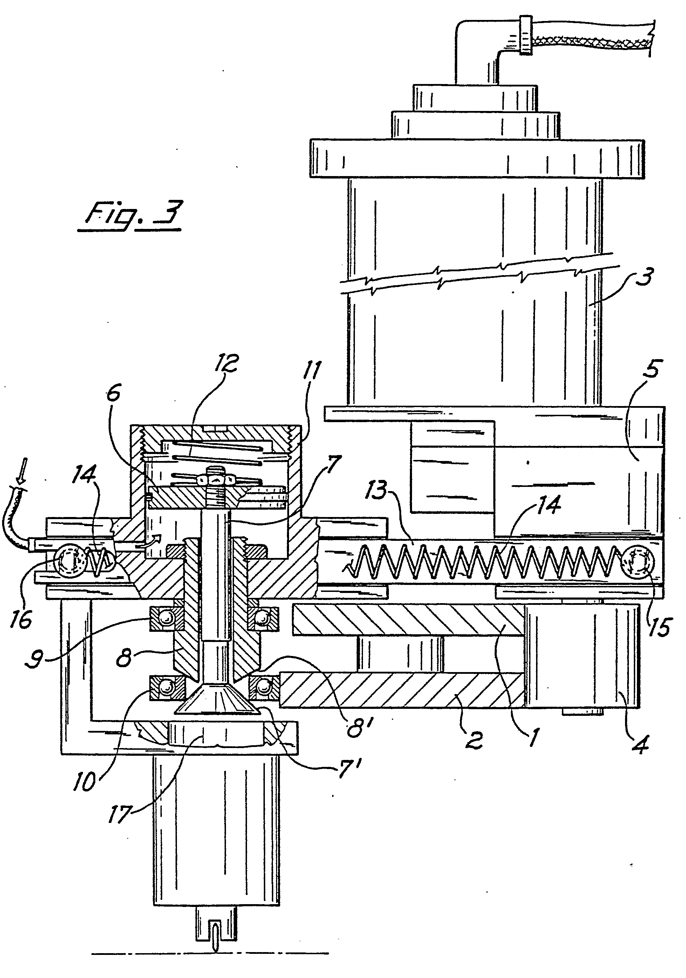

That part of the cutting machine which permits varying cutting dimensions according to requirements, is represented in the cross sectional views in figures 3 and 5, and essentially comprises a piston 6 actuated by compressed air which causes rod 7 to slide up or down sleeve 8. The lower section of this sleeve 8 is of truncated conical shape, which, when viewed, has its minor base facing downwards, while piston rod 7 likewise ends in a truncated cone but this time, when viewed, the minor base faces upwards.

Bearing 9 is keyed on sleeve 8. This bearing is blocked between suitable shoulders so that just the rotary movement of the movable bearing disc (inside the bearing) about the axis of rod 7 is permitted.

A second bearing 10, with the same diameter as the other bearing 9, is fitted below the latter, and can likewise be blocked, in turn, between the two truncated conical surfaces 8', 7' of sleeve 8 and rod 7 respectively each time (as in figure 3) the compressed air, after being commanded to enter cylinder 11, thrusts piston 6 and therefore piston rod 7 upwards thereby compressing spring 12 located in cylinder 11.

The internal bearing disc of bearing 10 results fixed in this case and remains locked for all the time necessary.

When, as a result of a subsequent command, the compressed air passageway is opened and air is discharged from cylinder 11, spring 12 (see figure 4) is extended; piston 6 with piston rod 7 will be thrusted downwards thereby releasing the internal bearing disc of bearing 10.

The end section of piston rod 7 will engage, in this case, a special recess 17 located on the apparatus, thereby leaving bearing 10 fully released.

The entire unit, as described above, comprising members 6 to 12, has provision for traversing horizontally along two guide ways 13 (only one of these guide ways is visible in figures 3 and 4, and two in figure 5 as the second guide way is on the opposite side) which also serve to support the unit.

Traversing of the unit with members 6 to 12 along the guide ways 13 is opposed by springs 14 (the second spring is also on the opposite side of the assembly and is only visible in figure 5).

Each one of these springs is attached first to a fixed pin 15 and then to another movable pin 16 which slides in relative slots located at the end part of guide ways 13; in this way, the springs keep the cutting unit in contact with the cutting template.

The actual operation of the machine will already be clear from the foregoing disclosure.

In practice, when it is required to score along a long profile, that is, along the inside part of just the ring 1, bearing 10 must be located in the lower position with respect to sectors 2, 2' and its internal bearing disc must have some play on piston rod 7; this can be achieved, as already seen, by discharging the compressed air from cylinder 11.

In this case, owing to the action of spring 14, the unit with items 6 to 12, will move towards pins 15 until bearing 9 comes into contact with ring 1.

The cutting machine will then move, being powered by the air motor, along ring 1 and the scoring unit will copy the internal profile of ring 1 (indicated by a dashed and dotted line in figures 3, 4 and 5).

At the end of this operation, compressed air again enters the cylinder, piston 6 and therefore piston rod 7 are thrusted upwards; bearing 10 will then be raised to the level of sectors 2, 2′ and will remain locked between the two surfaces 7′ and 8′.

As sectors 2, 2′ project inwards by a few millimetres with respect to ring 1, the path followed by the machine will be determined at this point by bearing 10, since, when this bearing comes into contact with said sectors 2 or 2′, it will cause the entire cutting unit 6—12 to move towards the left, and therefore the other bearing 9 will be retracted from cutting ring 1.

## Claims

1. Apparatus for scoring flat sheets, especially glass sheets, comprising a cutting machine and a cutting template, the last consisting of a main cutting ring (1) and of sectors (2, 2′) projecting from one side of said ring (1), with said sectors being rigidly connected to said ring (1), as to offer a scoring profile, wherein the cutting machine is powered by an air motor (3) able to control, through a reduction gear (5), the rotation of travelling wheels (4) along the outer profile (1) of the template, and said machine is provided with a scoring device comprising a compressed air actuated double-acting piston (6), whose rod (7) slides up and down in a sleeve (8) and whose head acts against a spring (12) located, together with the head, in a cylindrical chamber (11) into which enters said compressed air, characterized in that the sleeve (8) in said scoring device is smaller in diameter at the top and greater in diameter at the lower end, where it tapers off to form a truncated conical surface (8′) widening upwardly, and the piston rod (7) also terminates with a truncated conical surface (7′) but widening towards the bottom, whereby a bearing (9), keyed to the part of the sleeve (8) of smaller diameter, can be locked between suitable shoulders, and another bearing (10) of the same diameter as the previous one can be locked between the truncated conical parts of the sleeve (8) and piston rod (7), with the upper bearing (9), opposing the main cutting ring (1) when the piston rod (7) is lowered and compressed air is discharged, and with the lower bearing (10) opposing respectively sectors (2, 2′) projecting from the inside of said ring (1), and suitably located as to offer a different scoring profile, when the piston rod (7) is raised and compressed air enters the cylindrical chamber (11), thus allowing the cutting tool to score the glass according to two different profiles, long or short, in relation to production requirements, and thereby to score two patterns of different dimensions (the one shorter and the other longer) by using the same template.

2. Apparatus for scoring sheets, especially glass sheets, as claimed in claim 1, characterized moreover in that said scoring device is able to slide along two horizontal guides (13), which also support it, and is counteracted by two springs (14), hooked at one end to a fixed pin (15) and at the other end to a pin (16) which is movable in slots formed in the two guides (13); hence during automatic operation of the machine, either on or the other bearing (9, 10) is always in contact with the cutting template, according to whether compressed air is being supplied to or discharged from the cylindrical chamber (11) in which the piston head slides vertically.

## Revendications

1. Appareil pour entailler des plaques aplaties, en particulier des plaques de verre, comprenant une machine de coupe et un gabarit de coupe, ce dernier consistant en un anneau principal de coupe (1) et en des secteurs (2, 2′) faisant saillie au-delà de l'un des côtés dudit anneau (1), lesdits secteurs étant reliés rigidement audit anneau (1) de manière à offrir un profil d'entaillage, dans lequel la machine de couple reçoit sa puissance d'un moteur pneumatique (3) pouvant commander, par l'intermédiaire d'un engrenage réducteur (5), la rotation de rouleaux (4) se déplaçant le long du profil externe (1) du gabarit, et ladite machine est munie d'un dispositif d'entaillage comprenant un piston (6) à double action mû par de l'air comprimé, dont la tige (7) coulisse vers le haut et vers le bas dans une douille (8) et dont la tête agit à l'encontre d'un ressort (12) logé, conjointement à la tête, dans une chambre cylindrique (11) dans laquelle pénètre de l'air comprimé caractérisé par le fait que la douille (8) dans ledit dispositif d'entaillage présente un diamètre plus petit à son sommet et un diamètre plus grand à son extrémité inférieure à laquelle elle augmente de section pour former une surface (8′) en tronc de cône s'élargissant vers le haut, et la tige (7) du piston s'achève également par une surface (7′) en tronc de cône qui s'élargit toutefois en direction de son fond, un palier (9), claveté sur la partie de la douille (8) de plus petit diamètre, pouvant être bloqué entre des épaulements appropriés, et un autre palier (10) du même diamètre que le précédent pouvant être bloqué entre les parties tronconiques de la douille (8) et de la tige (7) du piston, le palier supérieur (9) étant opposé à l'anneau principal de coupe (1) lorsque la tige (7) du piston est abaissée et que de l'air comprimé est évacué, et le palier inférieur (10) étant opposé à des secteurs respectifs (2, 2') faisant saillie au-delà de la face interne dudit anneau (1) et occupant des positions adéquates de manière à offrir un profil d'entaillage différent, lorsque la tige (7) du piston est soulevée et que de l'air comprimé pénètre dans la chambre cylindrique (11), permettant ainsi à l'outil de coupe d'entailler le verre selon deux profils différents, long ou court, en fonction d'exigences de fabrication, et afin d'entailler de la sorte deux configurations de dimensions différentes (l'une étant plus courte et l'autre étant plus longue) en utilisant le même gabarit.

2. Appareil pour entailler des plaques, en particulier des plaques de verre, selon la revendication 1, caractérisé en outre par le fait que ledit dispositif d'entaillage peut coulisser le long de deux guides horizontaux (13), qui le supportent également, et est soumis à l'action antagoniste de deux ressorts (14), accrochés par l'une de leurs extrémités à un tenon fixe (15) et par l'autre extrémité à un tenon (16) qui est mobile dans des gorges élaborées dans les deux guides (13); ce qui fait que, lors du fonctionnement automatique de la machine, soit l'un, soit l'autre des paliers (9, 10) est toujours en contact avec le gabarit de coupe, selon que de l'air comprimé est délivré à ou évacué de la chambre cylindrique (11) dans laquelle la tête du piston coulisse verticalement.

## Patentansprüche

1. Vorrichtung zum Anschneiden flacher Platten, insbesondere Glasscheiben, mit einer Schneidmaschine und einer Schneidschablone, welche letztere aus einem Haupschneidring (1) und aus von einer Seite des Rings (1) vorspringenden und starr mit dem Ring (1) verbundenen Sektoren (2, 2') besteht, um ein Anschneidprofil darzustellen, in welcher Vorrichtung die Schneidmaschine von einem Druckluftmotor (3) angetrieben ist, der über ein Untersetzungsgetriebe (5) die Rotation von Laufrädern (4) entlang dem Außenprofil (1) der Schablone steuern kann, und die genannte Maschine mit einer Anscheideinrichtung mit einem druckluftbetätigten doppelwirkenden Kolben (6) versehen ist, dessen Stange (7) in einer Buchse (8) auf- und abgleitet und dessen Boden gegen eine Feder (12) wirkt, die zusammen mit dem Boden in einem zylindrischen Raum (11) angeordnet ist, in den Druckluft eintritt, dadurch gekennzeichnet, daß die Buchse (8) in der genannten Anschneideinrichtung kleiner im Durchmesser am oberen Ende und größer im Durchmesser am unteren Ende ist, wo sie sich verjüngt, um eine sich nach oben verbreiternde Kegelstumpf-Fläche (8') zu bilden, und die Kolbenstange (7) ebenfalls mit einer Kegelstumpf-Fläche (7') endet, die sich jedoch nach unten hin verbreitert, wodurch ein Lager (9), das an den Teil kleineren Durchmessers der Buchse (8) festgekeilt ist, zwischen geeigneten Schultern arretiert werden kann, und ein anderes Lager (10) mit dem gleichen Durchmesser wie das vorhergehende zwischen den Kegelstumpf-Teilen der Buchse (8) und der Kolben-stange (7) arretiert werden kann, wobei das obere Lager (9) dem Hauptschneidring (1) gegenübersteht, wenn die Kolbenstange (7) abgesenkt und Druckluft abgelassen ist, bzw. das untere Lager (10) Sektoren (2, 2') gegenübersteht, die von der Innenseite des Rings (1) vorspringen und geeignet angeordnet sind, um ein anderes Anschneidprofil darzustellen, wenn die Kolbenstange (7) angehoben ist und Druckluft in den zylindrischen Raum (11) eintritt, um somit dem Schneidwerkzeug das Anschneiden des Glases entsprechend zwei verschiedenen Profilen, lang oder kurz, in Abhängigkeit von den Produktionserfordernissen zu ermöglichen, und dadurch zwei Muster verschiedener Abmessungen (das eine kürzer und das andere länger) unter Benutzung derselben Schablone anzuschneiden.

2. Vorrichtung zum Anschneiden von Platten, insbesondere Glasscheiben, nach Anspruch 1, gekennzeichnet weiterhin dadurch, daß die Anschneideinrichtung an zwei horizontalen Führungen (13), die sie auch unterstützen, entlang gleiten kann und durch zwei Federn (14) beaufschlagt ist, die eingehängt sind mit einem Ende an einen unbeweglichen Stift (15) und mit dem anderen Ende an einen Stift (16), der in Schlitzen bewegbar ist, die in den zwei Führungen (13) ausgebildet sind, und daß infolgedessen während automatischen Betriebs der Maschine entweder das eine oder das andere Lager (9, 10) immer in Kontakt mit der Schneidschablone ist, je nachdem ob Druckluft dem zylindrischen Raum (11), in welchem der Kolbenboden vertikal gleitet, zugeführt oder von ihm abgelassen wird.

## _Fig. 1_

## _Fig. 2_

1

_Fig. 4_

_Fig. 5_

**0 029 533**

*Fig. 3*

3